# EUROPEAN PATENT APPLICATION

(11) **EP 4 546 451 A1**
(43) Date of publication of application: **30.04.2025**
(21) Application number: 23865281.2
(22) Date of filing: 30.08.2023
(51) Int. Cl.: H01M 4/136, H01G 11/06, H01G 11/24, H01G 11/30, H01M 4/133, H01M 4/36, H01M 4/58, H01M 10/0525

(54) **NON-AQUEOUS ELECTROLYTE ELECTRIC POWER STORAGE ELEMENT AND ELECTRIC POWER STORAGE DEVICE**

(30) Priority: 15.09.2022 JP 2022147095
(71) Applicant: GS Yuasa International Ltd., Kisshoin, Minami-ku, Kyoto-shi, Kyoto 601-8520 (JP)
(72) Inventor: ENDO Daisuke, Kyoto-shi, Kyoto 601-8520 (JP)
(74) Representative: Isarpatent
(86) International application number: PCT/JP2023/031364
(87) International publication number: WO 2024/057925

(57) **Abstract**

A nonaqueous electrolyte energy storage device according to one aspect of the present invention includes: a positive electrode including a carbon-coated positive active material; a negative electrode including a negative active material; and a nonaqueous electrolyte, wherein the carbon-coated positive active material includes a positive active material containing a lithium transition metal compound having a polyanion structure, and a coating layer containing a carbon element and coating at least a part of the positive active material, wherein a ratio of a BET specific surface area of the positive active material to a BET specific surface area of the carbon-coated positive active material is 0.40 or more and 0.80 or less, and wherein the negative active material contains a carbon material.

## Description

### TECHNICAL FIELD

The present invention relates to a nonaqueous electrolyte energy storage device and an energy storage apparatus.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. Capacitors such as lithium ion capacitors and electric double layer capacitors are also widely used as nonaqueous electrolyte energy storage devices other than the nonaqueous electrolyte secondary batteries.

As an example of a nonaqueous electrolyte energy storage device, Patent Document 1 describes a lithium secondary battery using lithium iron phosphate as a positive active material.

### PRIOR ART DOCUMENTS

### PATENT DOCUMENT

Patent Document 1: JP-A-2015-215977

### SUMMARY OF THE INVENTION

### PROBLEMS TO BE SOLVED BY THE INVENTION

In a nonaqueous electrolyte energy storage device using a lithium transition metal compound having a polyanion structure such as lithium iron phosphate as a positive active material, power performance may be deteriorated after a charge-discharge cycle.

The present invention has been made in view of the above circumstances, and an object of the present invention is to provide a nonaqueous electrolyte energy storage device and an energy storage apparatus capable of suppressing a decrease in a power retention rate after a charge-discharge cycle.

### MEANS FOR SOLVING THE PROBLEMS

A nonaqueous electrolyte energy storage device according to one aspect of the present invention includes: a positive electrode including a carbon-coated positive active material; a negative electrode including a negative active material; and a nonaqueous electrolyte, wherein the carbon-coated positive active material includes a positive active material containing a lithium transition metal compound having a polyanion structure, and a coating layer containing a carbon element and coating at least a part of the positive active material, wherein a ratio of a BET specific surface area of the positive active material to a BET specific surface area of the carbon-coated positive active material is 0.40 or more and 0.80 or less, and wherein the negative active material contains a carbon material.

An energy storage apparatus according to another aspect of the present invention includes: one or more energy storage devices according to another aspect of the present invention; and two or more energy storage devices.

### ADVANTAGES OF THE INVENTION

The nonaqueous electrolyte energy storage device and the energy storage apparatus according to one aspect of the present invention can suppress a decrease in power retention rate after a charge-discharge cycle.

### BRIEF DESCRIPTION OF THE DRAWINGS

Fig. 1 is a see-through perspective view illustrating an embodiment of a nonaqueous electrolyte energy storage device.
Fig. 2 is a schematic diagram showing an embodiment of an energy storage apparatus including a plurality of nonaqueous electrolyte energy storage devices.

### MODE FOR CARRYING OUT THE INVENTION

First, outlines of a nonaqueous electrolyte energy storage device and an energy storage apparatus disclosed in the present specification will be described.

[1] A nonaqueous electrolyte energy storage device according to one aspect of the present invention includes: a positive electrode including a carbon-coated positive active material; a negative electrode including a negative active material; and a nonaqueous electrolyte, wherein the carbon-coated positive active material includes a positive active material containing a lithium transition metal compound having a polyanion structure, and a coating layer containing a carbon element and coating at least a part of the positive active material, wherein a ratio of a BET specific surface area of the positive active material to a BET specific surface area of the carbon-coated positive active material is 0.40 or more and 0.80 or less, and wherein the negative active material contains a carbon material.
   The nonaqueous electrolyte energy storage device according to [1] can suppress a decrease in power retention rate after a charge-discharge cycle. The reasons therefor are not clear, but the following reasons are presumed. The nonaqueous electrolyte energy storage device according to [1] includes a positive active material in which the positive electrode contains a lithium transition metal compound (lithium iron phosphate or the like) having a polyanion structure. In such a conventional nonaqueous electrolyte energy storage device, the transition metal cation constituting the lithium transition metal compound is easily eluted into the nonaqueous electrolyte, and the formation of a coating derived from the transition metal cation on the surface of the negative active material may proceed by repeating charge-discharge cycles. That is, due to the formation of the coating, the power performance may be deteriorated after a charge-discharge cycle. Here, when the negative active material is made of metal lithium, since the metal lithium is dissolved and precipitated by the charge-discharge reaction, the progress of the formation of the coating derived from the transition metal cation on the surface of the negative active material by repeating the charge-discharge cycle is slow, and the influence on the power performance of the coating is small. On the other hand, when the negative active material contains a carbon material, since the carbon material is not dissolved and precipitated by the charge-discharge reaction, the progress of the formation of the coating derived from the transition metal cation on the surface of the negative active material by repeating the charge-discharge cycle becomes remarkable, and thus the influence on the power performance of the coating becomes significant. On the other hand, the positive electrode of the nonaqueous electrolyte energy storage device according to [1] includes a carbon-coated positive active material in which the positive active material is coated with a coating layer containing a carbon element. Therefore, contact between the positive active material and the nonaqueous electrolyte can be suppressed. The ratio of the BET specific surface area of the positive active material to the BET specific surface area of the carbon-coated positive active material is within a certain range. Here, the ratio of the BET specific surface area of the positive active material to the BET specific surface area of the carbon-coated positive active material represents the degree of denseness of the coating layer. That is, in the carbon-coated positive active material according to the present invention, the moderately dense coating layer coats the positive active material. Therefore, even when the negative active material contains a carbon material, the coating layer can effectively suppress the elution of the transition metal cation and the formation of the coating film on the surface of the negative active material. Therefore, it is considered that the decrease in the power retention rate after the charge-discharge cycle is suppressed.
[2] In the nonaqueous electrolyte energy storage device according to [1], the negative active material may contain graphite, and the negative active material may have an average particle size of 20 µm or less. In general, by using a negative active material having a small particle size, particularly graphite having a small particle size, the power performance of the nonaqueous electrolyte energy storage device can be improved. In this case, in the conventional nonaqueous electrolyte energy storage device, when a lithium transition metal compound having a polyanion structure is used as the positive active material, the formation of the coating on the surface of the negative active material may be accelerated. On the other hand, in the nonaqueous electrolyte energy storage device according to [2], as described above, elution of the transition metal cation can be suppressed by the coating layer coating the positive active material. Therefore, when the negative active material contains graphite and the average particle size of the negative active material is the above upper limit or less, the effect of the present invention that suppresses a decrease in the power retention rate after a charge-discharge cycle while improving the initial power is remarkably exhibited.
[3] In the nonaqueous electrolyte energy storage device according to [1] or [2], the ratio may be 0.50 or more, and the average particle size of the negative active material may be 5 µm or less. As described above, when the average particle size of the negative active material is the upper limit or less, the initial power can be further improved. In addition, when the ratio is the lower limit or more, it is possible to more reliably suppress a decrease in the power retention rate after a charge-discharge cycle. Therefore, when the ratio is the above lower limit or more and the average particle size of the negative active material is the above upper limit or less, the initial power can be further improved in a state where a decrease in the power retention rate after a charge-discharge cycle is suppressed.

In the present invention, the "average particle size" means a particle size (median diameter) at which a volume-based integrated distribution calculated in accordance with JIS-Z-8819-2 (2001) based on a particle size distribution obtained by measuring the particle size distribution of a diluted solution obtained by diluting a sample to be measured with a solvent by a laser diffraction/scattering method in accordance with JIS-Z-8825 (2013) is 50%. In the present invention, the "BET specific surface area" is determined by immersing a sample to be measured in liquid nitrogen, physically adsorbing nitrogen molecules on the particle surface by supplying nitrogen gas, and measuring the pressure and the adsorption amount at that time. As a specific measurement method, the amount of nitrogen adsorption [m²] with respect to the sample is determined by a one-point method. The value obtained by dividing the obtained amount of nitrogen adsorption by a mass [g] of the sample is defined as the BET specific surface area [m²/g].

In the measurement of the average particle size and the BET specific surface area described above, a sample collected from the nonaqueous electrolyte energy storage device after the initial charge-discharge is taken as a measurement target. Specifically, a sample to be measured is collected by the following procedure. The nonaqueous electrolyte energy storage device after the initial charge-discharge is discharged at a constant current with a current of 0.1 C until the voltage becomes an end-of-discharge voltage under normal usage, so that the energy storage device is brought to a discharged state. Here, the term "normal use" means use of the nonaqueous electrolyte energy storage device under the charge-discharge conditions recommended or specified for the nonaqueous electrolyte energy storage device. Next, the nonaqueous electrolyte energy storage device in a discharged state is disassembled, the positive electrode or the negative electrode is taken out, and a component (electrolyte or the like) adhering to the positive electrode or the negative electrode is sufficiently washed with dimethyl carbonate. Thereafter, the positive electrode or the negative electrode is dried under reduced pressure at room temperature for 24 hours. Next, powder of the positive active material layer or the negative active material layer is collected from the positive electrode or the negative electrode. An arbitrary component such as a conductive agent mixed in the powder of the positive active material layer or the negative active material layer is removed using wind power classification or the like, and a sample to be measured is collected. Disassembly of the nonaqueous electrolyte energy storage device and collection of a sample to be measured are performed in an argon atmosphere having a dew point of -60°C or lower.

The "BET specific surface area of the carbon-coated positive active material" and the "BET specific surface area of the positive active material" are determined by the following procedure. First, the positive electrode taken out by disassembling the nonaqueous electrolyte energy storage device is washed and dried as described above, and then the BET specific surface area of the collected carbon-coated positive active material is measured. Next, the coating layer is removed by firing the carbon-coated positive active material at 350°C for 4 hours in the air atmosphere. Thereafter, the BET specific surface area of the positive active material from which the coating layer is removed is measured.

[4] An energy storage apparatus according to another aspect of the present invention includes: one or more nonaqueous electrolyte energy storage devices according to any one of [1] to [3]; and two or more nonaqueous electrolyte energy storage devices. Since the energy storage apparatus according to [4] includes one or more nonaqueous electrolyte energy storage devices according to any one of [1] to [3], it is possible to suppress a decrease in a power retention rate after a charge-discharge cycle.

Hereinafter, a nonaqueous electrolyte energy storage device, an energy storage apparatus, a method for producing a nonaqueous electrolyte energy storage device, and other embodiments according to an embodiment of the present invention will be described in detail. It is to be noted that the names of the respective constituent members (respective constituent elements) for use in the respective embodiments may be different from the names of the respective constituent members (respective constituent elements) for use in the background art.

### [Nonaqueous electrolyte energy storage device]

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with a separator interposed therebetween, or a wound type obtained by winding a positive electrode and a negative electrode stacked with a separator interposed therebetween. The nonaqueous electrolyte is present in a state of being contained in the positive electrode, the negative electrode, and the separator. A nonaqueous electrolyte secondary battery (hereinafter, also referred to simply as a "secondary battery") will be described as an example of the nonaqueous electrolyte energy storage device.

### <Positive electrode>

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 µm or more and 50 µm or less, more preferably 5 µm or more and 40 µm or less, still preferably 8 µm or more and 30 µm or less, particularly preferably 10 µm or more and 25 µm or less. When the average thickness of the positive substrate falls within the above range, it is possible to enhance the energy density per volume of the nonaqueous electrolyte energy storage device while increasing the strength of the positive substrate.

The intermediate layer is a layer arranged between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

### (Positive Active Material Layer)

In an embodiment of the present invention, the positive active material layer contains a carbon-coated positive active material. In addition, the positive active material layer can contain optional components such as a conductive agent, a binder, a thickener, and a filler as necessary.

The carbon-coated positive active material includes a positive active material and a coating layer (hereinafter, also referred to as "carbon coating layer") containing a carbon element and coating at least a part of the positive active material. The carbon-coated positive active material is usually a granular material having particles of the positive active material as nuclei. Examples of the method for producing a carbon-coated positive active material include pulverizing a mixture obtained by mixing a positive active material, an organic compound serving as a carbon source, and the like and a solvent with a bead mill or the like to prepare a slurry, and then drying and heat treating the slurry. Examples of the organic compound include polyvinyl alcohol, polyvinyl pyrrolidone, cellulose, starch, gelatin, carboxymethyl cellulose, methyl cellulose, hydroxymethyl cellulose, hydroxyethyl cellulose, polyacrylic acid, polystyrene sulfonic acid, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyether, and polyhydric alcohol. Examples of the polyhydric alcohol include polyethylene glycol, polypropylene glycol, polyglycerin, and glycerin.

The positive active material of the carbon-coated positive active material contains a lithium transition metal compound having a polyanion structure.

Examples of the lithium transition metal compound (hereinafter, also referred to as "polyanion compound") include LiFePO₄, LiMnPO₄, LiNiPO₄, LiMn_{0.5}Ni_{0.5}PO₄, LiCoPO₄, Li₃V₂(PO₄)₃, Li₂MnSiO₄, Li₂FePO₄F, Li₂CoPO₄F, and Li₂NiPO₄F. Among them, a compound containing a phosphate ion (PO₄³⁻) (phosphate compound) is preferable, and lithium iron phosphate (LiFePO₄) is more preferable. The polyanion compound may be one in which atoms constituting the polyanion or a part of the polyanion is substituted with other atoms or other anion species. In general, the polyanion compound has low conductivity, but the conductivity can be improved by coating at least a part with the carbon coating layer. One of the polyanion compound may be used singly, or two or more thereof may be used in mixture.

The content of the lithium transition metal compound in the positive active material of the carbon-coated positive active material can be, for example, 95% by mass or more and 100% by mass or less. That is, the positive active material of the carbon-coated positive active material may be substantially composed only of the lithium transition metal compound.

The content of the lithium transition metal compound in the carbon-coated positive active material is preferably 90.0% by mass or more and 99.5% by mass or less, more preferably 92.0% by mass or more and 99.2% by mass or less, still preferably 94.0% by mass or more and 99.0% by mass or less. When the content of the lithium transition metal compound falls within the above range, the carbon-coated positive active material can be easily produced.

In an embodiment of the present invention, the carbon coating layer of the carbon-coated positive active material contains a carbon element as described above. The content of the carbon element in the carbon coating layer can be, for example, 95% by mass or more and 100% by mass or less. That is, the carbon coating layer of the carbon-coated positive active material may be substantially composed only of a carbon element. The carbon element in the carbon coating layer formed by the above-described procedure usually presents in a form in which high crystalline carbon and low crystalline carbon are mixed.

The lower limit of the content of the carbon element in the carbon-coated positive active material is preferably 0.5% by mass, more preferably 0.7% by mass, and still preferably 1.0% by mass. On the other hand, the upper limit of the content is preferably 3.0% by mass, more preferably 2.5% by mass, and still preferably 2.0% by mass. By setting the content of the carbon element to the above lower limit or more, the positive active material can be sufficiently coated with the carbon coating layer, and the power retention rate and the like of the nonaqueous electrolyte energy storage device can be increased. By setting the content of the carbon element to the above upper limit or less, the content of the positive active material can be relatively increased, and the energy density of the nonaqueous electrolyte energy storage device can be increased.

The lower limit of the ratio of the BET specific surface area of the positive active material to the BET specific surface area of the carbon-coated positive active material is 0.40, preferably 0.50, and more preferably 0.60. On the other hand, the upper limit of the ratio is 0.80, preferably 0.77, and more preferably 0.75. Here, the ratio of the BET specific surface area of the positive active material to the BET specific surface area of the carbon-coated positive active material represents the degree of denseness of the carbon coating layer. When the ratio is large, the BET specific surface area of the carbon-coated positive active material is small, which means that the carbon-coated positive active material includes a relatively dense carbon coating layer. When the ratio is small, the BET specific surface area of the carbon-coated positive active material is large, which means that the carbon-coated positive active material includes a relatively rough carbon coating layer. Therefore, when the ratio is the lower limit or more, the moderately dense carbon coating layer coats the positive active material, so that it is easy to suppress a decrease in the power retention rate after a charge-discharge cycle. When the ratio is equal to or less than the upper limit, the ion conductivity of the positive active material layer is easily secured, and the charge-discharge reaction is easily uniformized.

The lower limit of the BET specific surface area of the carbon-coated positive active material is preferably 10.0 m²/g, more preferably 13.0 m²/g, still preferably 13.5 m²/g. On the other hand, the upper limit of the BET specific surface area of the carbon-coated positive active material is preferably 15.0 m²/g, more preferably 14.0 m²/g, still preferably 13.8 m²/g. When the BET specific surface area of the carbon-coated positive active material is the lower limit or more, the power performance is easily improved. When the BET specific surface area of the carbon-coated positive active material is the above upper limit or less, it is easy to suppress a decrease in the power retention rate after a charge-discharge cycle. The BET specific surface area of the carbon-coated positive active material can be controlled by adjusting the BET specific surface area of the positive active material and the BET specific surface area of the carbon coating layer in the carbon-coated positive active material by a method described later.

The lower limit of the BET specific surface area of the positive active material in the carbon-coated positive active material is preferably 4.0 m²/g, more preferably 5.0 m²/g, still preferably 5.5 m²/g. On the other hand, the upper limit of the BET specific surface area of the positive active material is preferably 13 m²/g, more preferably 12 m²/g, still preferably 11 m²/g. When the BET specific surface area of the positive active material is the lower limit or more, the power performance is easily improved. When the BET specific surface area of the positive active material is the above upper limit or less, it is easy to suppress a decrease in the power retention rate after a charge-discharge cycle. The BET specific surface area of the positive active material can be controlled by, for example, adjusting the time for pulverization with a bead mill or the like in the above-described method for producing a carbon-coated positive active material.

The lower limit of the difference in BET specific surface area between the carbon-coated positive active material and the positive active material (the value obtained by subtracting the BET specific surface area of the positive active material from the BET specific surface area of the carbon-coated positive active material) is preferably 1.0 m²/g, more preferably 2.0 m²/g, still preferably 2.5 m²/g. On the other hand, the upper limit of the difference is preferably 9.0 m²/g, more preferably 8.0 m²/g, and still preferably 7.0 m²/g. When the difference is the lower limit or more, the power performance is easily improved. When the difference is equal to or less than the upper limit, it is easy to suppress a decrease in the power retention rate after a charge-discharge cycle. The difference is proportional to the BET specific surface area of the carbon coating layer in the carbon-coated positive active material. The BET specific surface area of the carbon coating layer can be controlled by, for example, changing the carbon source or adjusting the heat treatment temperature and the heat treatment time in the method for producing a carbon-coated positive active material described above.

The positive active material layer may contain a positive active material other than the carbon-coated positive active material. Examples of the other positive active material include a lithium transition metal composite oxide including an α-NaFeO₂-type crystal structure, a lithium transition metal composite oxide including a spinel-type crystal structure, a polyanion compound including no carbon coating layer, a chalcogenide, and sulfur. Examples of the lithium transition metal composite oxides that includes an α-NaFeO₂-type crystal structure include Li[LiₓNi₍₁₋ₓ₎]O₂ (0 ≤ x < 0.5), Li[LiₓNi_{γ}Co_{(1-x-γ})]O₂ (0 ≤ x < 0.5, 0 < y < 1, 0 < 1-x-y), Li[LiₓCo₍₁₋ₓ)]O₂ (0 ≤ x < 0.5), Li[LiₓNi_{γ}Mn_{(1-x-γ})]O₂ (0 ≤ x < 0.5, 0 < y < 1, 0 < 1-x-y), Li[LiₓNi_{γ}MnₑCo_{(1-x-γ-β)}]O₂ (0 ≤ x < 0.5, 0 < y, 0 < β, 0.5 < y + β < 1, 0 < 1-x-γ-β), and Li[LiₓNi_{γ}Co_{β}Al_{(1-x-γ-β)}]O₂ (0 ≤ x < 0.5, 0 < y, 0 < β, 0.5 < y + β < 1, 0 < 1-x-γ-β). Examples of the lithium-transition metal composite oxides including a spinel-type crystal structure include LiₓMn₂O₄ and LiₓNi_{γ}Mn_{(2-γ)}O₄. Examples of the polyanion compounds having no carbon coating layer include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. The surface of these materials may be coated with a material other than the carbon coating layer. In the positive active material layer, one of these materials may be used singly, or two or more thereof may be mixed and used.

The carbon-coated positive active material and the other positive active material are particles (powder). The average particle size of the carbon-coated positive active material is preferably, for example, 0.1 µm or more and 20 µm or less. By setting the average particle size of the carbon-coated positive active material to the above lower limit or more, the production or handling of the carbon-coated positive active material becomes easy. By setting the average particle size of the carbon-coated positive active material to the above upper limit or less, the ion conductivity in the positive active material layer is improved.

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the carbon-coated positive active material in the positive active material layer is preferably 50% by mass or more and 99% by mass or less, more preferably 70% by mass or more and 98% by mass or less, still preferably 80% by mass or more and 96% by mass or less. By setting the content of the carbon-coated positive active material within the above range, the effect of the present invention of increasing the power retention rate and the like after charge-discharge cycles is remarkably exhibited.

The total content of all the positive active materials in the positive active material layer is preferably 50% by mass or more and 99% by mass or less, more preferably 70% by mass or more and 98% by mass or less, still preferably 80% by mass or more and 96% by mass or less, and still more preferably 90% by mass or more and 95% by mass or less. When the total content of all the positive active materials falls within the above range, both high energy density and productivity of the positive active material layer can be achieved.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. These materials may be composited and then used. For example, a composite material of carbon black and CNT may be used. Among these materials, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the above range, the energy density of the nonaqueous electrolyte energy storage device can be enhanced. The carbon coating layer is not included in the conductive agent.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 2% by mass or more and 9% by mass or less, still preferably 3% by mass or more and 6% by mass or less. When the content of the binder falls within the above range, thereby allowing the positive active material to be stably held.

Examples of the thickener include polysaccharide polymers such as carboxymethylcellulose (CMC) and methylcellulose. When the thickener includes a functional group that is reactive with lithium and the like, the functional group may be deactivated by methylation or the like in advance. In an embodiment of the present invention, the thickener is preferably not contained in the positive active material layer in some cases.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In an embodiment of the present invention, the filler is preferably not contained in the positive active material layer in some cases.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agent, the binder, the thickener, and the filler.

### <Negative electrode>

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still preferably 4 µm or more and 25 µm or less, particularly preferably 5 µm or more and 20 µm or less. When the average thickness of the negative substrate falls within the above range, it is possible to enhance the energy density per volume of a secondary battery while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material contains a carbon material. The negative active material can be appropriately selected from known carbon materials. As the negative active material for a lithium ion secondary battery, a material capable of occluding and releasing lithium ions is usually used. Examples of the negative active material include carbon materials such as graphite and non-graphitic carbon (easily graphitizable carbon or hardly graphitizable carbon). Among these materials, graphite and non-graphitic carbon are preferable, and graphite is more preferable. In the negative active material layer, one of these materials may be used alone, or two or more thereof may be used in mixture.

The term "graphite" refers to a carbon material in which the average grid spacing (d₀₀₂) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be procured.

The term "non-graphitic carbon" refers to a carbon material in which the average grid spacing (d₀₀₂) of the (002) plane determined by an X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The "hardly graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less, and may be 0.5 µm or more and 100 µm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the negative active material layer is improved. A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The negative active material is preferably particles. The upper limit of the average particle size of the negative active material is preferably 20 µm, more preferably 16 µm, and still preferably 12 µm. When the upper limit of the average particle size is the above upper limit or less, the effect of the present invention that easily improves the initial power and suppresses the decrease in the power retention rate after charge-discharge cycles is remarkably exhibited. Furthermore, from the same viewpoint, it is preferable that the negative active material contains graphite and the average particle size is 20 µm or less, it is more preferable that the negative active material contains graphite and the average particle size is 16 µm or less, it is still preferable that the negative active material contains graphite and the average particle size is 12 µm or less, and it is still more preferable that the negative active material contains graphite and the average particle size is 5 µm or less. On the other hand, the lower limit of the average particle size of the negative active material can be set to, for example, 0.5 µm from the viewpoint of producing cost.

When the average particle size of the negative active material is small, the transition metal cation derived from the positive active material eluted in the nonaqueous electrolyte may accelerate the coating formation on the surface of the negative active material. That is, when the average particle size of the negative active material is small, it is preferable to protect the positive active material with the above-described appropriately dense carbon coating layer so as to correspond thereto. Therefore, from the viewpoint of achieving both the improvement of the initial power and the suppression of the decrease in the power retention rate after the charge-discharge cycle, it is preferable that the ratio of the BET specific surface area of the positive active material to the BET specific surface area of the carbon-coated positive active material described above is 0.50 or more and 0.80 or less, and the average particle size of the negative active material is 0.5 µm or more and 5 µm or less.

The content of the negative active material in the negative active material layer is preferably 60% by mass or more and 99% by mass or less, more preferably 90% by mass or more and 98% by mass or less. When the content of the negative active material falls within the above range, it is possible to achieve both high energy density and productivity of the negative active material layer. When the negative active material is metallic Li, the content of the negative active material in the negative active material layer may be 99% by mass or more, and may be 100% by mass.

### <Separator>

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a composite material of these resins may also be used.

The heat resistant particles contained in the heat resistant layer have preferably a mass loss of 5% or less when heated from room temperature to 500°C in an air atmosphere of 1 atm, still preferably a mass loss of 5% or less when heated from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the nonaqueous electrolyte energy storage device.

The separator has a porosity of preferably 80% by volume or less from the viewpoint of strength, and preferably 20% by volume or more from the viewpoint of discharge performance. Here, the term "porosity" is a volume-based value, and means a value measured with a mercury porosimeter.

As the separator, a polymer gel composed of a polymer and an electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with the porous resin film, the nonwoven fabric, or the like described above.

### <Nonaqueous electrolyte>

As the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, one obtained by substituting, with a halogen, a part of hydrogen atoms contained in these compounds may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use a cyclic carbonate or a chain carbonate, and it is more preferable to use a cyclic carbonate and a chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When a cyclic carbonate and a chain carbonate are used in combination, the volume ratio between the cyclic carbonate and the chain carbonate (cyclic carbonate : chain carbonate) is preferably set to, for example, a range from 5 : 95 to 50 : 50.

The electrolyte salt can be appropriately selected from known electrolyte salts. Examples of the electrolyte salt include a lithium salt, a sodium salt, a potassium salt, a magnesium salt, and an onium salt. Among these examples, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts including a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, under 1 atm at 20°C, preferably 0.1 mol/dm³ or more and 2.5 mol/dm³ or less, more preferably 0.3 mol/dm³ or more and 2.0 mol/dm³ or less, still preferably 0.5 mol/dm³ or more and 1.7 mol/dm³ or less, particularly preferably 0.7 mol/dm³ or more and 1.5 mol/dm³ or less. The content of the electrolyte salt falls within the above range, thereby allowing the ionic conductivity of the nonaqueous electrolyte solution to be increased.

The nonaqueous electrolyte solution may contain an additive in addition to the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still preferably 0.2% by mass or more and 5% by mass or less, and particularly preferably 0.3% by mass or more and 3% by mass or less, with respect to a total mass of the nonaqueous electrolyte solution. When the content of the additive falls within the above range, it is possible to improve capacity retention performance or charge-discharge cycle performance after high-temperature storage, and to further improve safety.

The shape of the nonaqueous electrolyte energy storage device according to the present embodiment is not particularly limited, and examples thereof include cylindrical batteries, prismatic batteries, flat batteries, coin batteries, and button batteries.

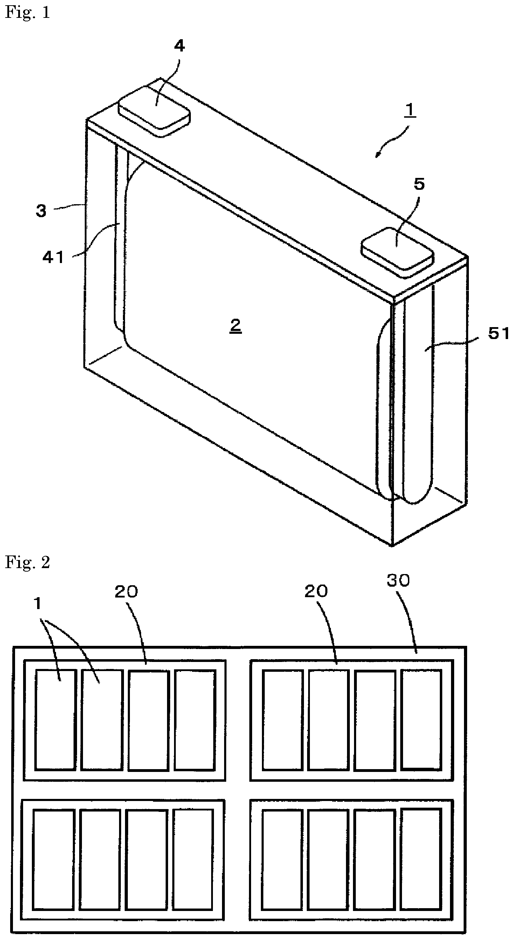

Fig. 1 shows a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### [Configuration of energy storage apparatus]

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

An energy storage apparatus according to an embodiment of the present invention includes one or more nonaqueous electrolyte energy storage devices according to the embodiment of the present invention and two or more nonaqueous electrolyte energy storage devices (Hereinafter, this is referred to as a "second embodiment".). The technique according to an embodiment of the present invention may be applied to at least one nonaqueous electrolyte energy storage device included in the energy storage apparatus according to the second embodiment, one nonaqueous electrolyte energy storage device according to an embodiment of the present invention may be provided, and one or more nonaqueous electrolyte energy storage devices not according to an embodiment of the present invention may be provided, or two or more nonaqueous electrolyte energy storage devices according to an embodiment of the present invention may be provided.

Fig. 2 illustrates an example of an energy storage apparatus 30 according to the second embodiment, formed by further assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### [Method for producing nonaqueous electrolyte energy storage device]

A method for producing the nonaqueous electrolyte energy storage device of the present embodiment can be appropriately selected from known methods. The producing method includes, for example, preparing an electrode assembly, preparing a nonaqueous electrolyte, and housing the electrode assembly and the nonaqueous electrolyte in a case. The preparing an electrode assembly includes: preparing a positive electrode and a negative electrode, and forming an electrode assembly by stacking or winding the positive electrode and the negative electrode with a separator interposed therebetween.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### [Other embodiments]

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to a configuration of an embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples. The present invention is not limited to the following examples.

### [Example 1]

### (Fabrication of positive electrode)

First, a carbon-coated positive active material was prepared by the following procedure.

Lithium hydroxide monohydrate, diammonium hydrogen phosphate, and iron sulfate heptahydrate were weighed so that the molar ratio of Li : Fe : P was 3 : 1 : 1, and mixed with ion-exchanged water to prepare a solution. Next, this solution was transferred to a polytetrafluoroethylene case, and this was placed in a pressure-resistant hydrothermal reaction case. The inside of the reaction case was sufficiently replaced with nitrogen gas and sealed, and then heated at 170°C for 15 hours to perform hydrothermal synthesis. After completion of the reaction, the product obtained by natural cooling to room temperature was sufficiently washed with ion-exchanged water and then dried under reduced pressure at 120°C for 6 hours to obtain a positive active material of lithium iron phosphate. Thereafter, in order to form a carbon coating layer coating the positive active material, the positive active material powder and polyvinyl alcohol as a carbon source were mixed with ion-exchanged water, a bead mill treatment was performed using zirconia beads having a diameter of 0.1 mm, and wet pulverization was performed. The mixing ratio of the positive active material powder and the polyvinyl alcohol was adjusted so that the content of the carbon coating layer (carbon element) in the carbon-coated positive active material was 1.0% by mass. The mixture was spray dried by a spray dryer to obtain a granulated dry powder. Finally, the dried powder was heated in a tubular furnace at 720°C for 2 hours under a flow of nitrogen gas to obtain a carbon-coated positive active material.

The BET specific surface area B1 of the resulting carbon-coated positive active material and the BET specific surface area B2 of the resulting positive active material were 13.5 [m²/g] and 10.8 [m²/g], respectively. The ratio B2/B1(hereinafter, also referred to as an "active material BET ratio") of the BET specific surface area B2 of the carbon coating layer to the BET specific surface area B1 of the carbon-coated positive active material was 0.80. According to findings by the inventor, since the BET specific surface area measured before the initial charge-discharge described later is not substantially different from the BET specific surface area measured after the initial charge-discharge, the measured value of the BET specific surface area measured before the initial charge-discharge is adopted in the present Example. Here, "there is substantially no difference" means that the difference in measured values is less than 1%, and the same applies hereinafter.

Next, a positive composite paste containing the carbon-coated positive active material, acetylene black (AB) as a conductive agent, and polyvinylidene fluoride (PVDF) as a binder at a mass ratio of 90 : 5 : 5 in terms of solid content with N-methylpyrrolidone (NMP) as a dispersion medium was prepared. The positive composite paste was directly applied to both surfaces of an aluminum foil as a positive substrate, dried, and then pressed. Thus, a positive electrode was obtained in which a positive active material layer was stacked on both surfaces of a positive substrate.

### (Fabrication of negative electrode)

Graphite particles having an average particle size of 12 µm were prepared as a negative active material. The graphite particles, a styrenebutadiene rubber (SBR) as a binder, carboxymethyl cellulose (CMC) as a thickener, and water as a dispersion medium were used to prepare a negative composite paste. It is to be noted that the mass ratios of the graphite particles, SBR, and CMC were set to be 98 : 1 : 1 (in terms of solid content). The negative composite paste was applied to both surfaces of a copper foil as a negative substrate, and dried. Thereafter, roll pressing was performed to obtain a negative electrode. According to findings by the present inventor, since the average particle size of the negative active material measured before the initial charge-discharge described later is not substantially different from the average particle size measured after the initial charge-discharge, the measured value of the average particle size measured before the initial charge-discharge is adopted in this example.

### (Preparation of nonaqueous electrolyte)

In a nonaqueous solvent in which EC and EMC were mixed at a volume ratio of 30 : 70, LiPF₆ as an electrolyte salt was dissolved at a concentration of 0.9 mol/dm³ to prepare a solution. The solution was obtained as a nonaqueous electrolyte.

### (Fabrication of nonaqueous electrolyte energy storage device)

A wound electrode assembly was obtained using a positive electrode, a negative electrode, and a polyolefin porous resin film as a separator. The electrode assembly was housed in a case, the nonaqueous electrolyte was injected into the case, and the case was sealed to obtain a nonaqueous electrolyte energy storage device according to Example 1.

### [Examples 2 to 16 and Comparative Examples 1 to 3]

In Examples 2 to 16 and Comparative Examples 1 to 3, nonaqueous electrolyte energy storage devices were obtained by the same procedure as in Example 1 except that the BET specific surface area B1 of the carbon-coated positive active material, the BET specific surface area B2 of the positive active material, the BET ratio of the active material, and the average particle size of the negative active material were as shown in Table 1. The BET specific surface area B1 of the carbon-coated positive active material, the BET specific surface area B2 of the positive active material, and the average particle size of the negative electrode were adjusted by the following methods.

The BET specific surface area of the positive active material was adjusted by changing the time of bead mill treatment in the preparation of the carbon-coated positive active material.

The BET specific surface area of the carbon-coated positive active material was adjusted by changing the heating temperature in the final step in the preparation of the carbon-coated positive active material in addition to the adjustment of the BET specific surface area of the positive active material described above.

The average particle size of the negative active material was adjusted using a crusher.

### [Evaluation]

### (1) Initial power

The obtained respective nonaqueous electrolyte energy storage devices were subjected to initial charge-discharge at 25°C in the following manner. Constant current charge was performed up to 3.5 V at a current of 0.2 C, and then constant voltage charge was performed at a voltage of 3.5 V. With regard to the charge termination conditions, the charge was performed until the charge current reached 0.01 C. Thereafter, a pause of 10 minutes was provided. Thereafter, constant current discharge was performed up to 2.0 V at a current of 0.2 C.

Subsequently, constant current charge was performed at a current of 1.0 C at 25°C to set the SOC to 50%. Subsequently, the energy storage devices were discharged at each current of 0.2 C, 0.5 C, or 1.0 C for 30 seconds. After completion of each discharge, the energy storage devices were subjected to constant current charge at a current of 1.0 C to the SOC of 50%. The relationship between the current and the voltage at 10 seconds after the start of the discharge for each discharge was plotted, and the low-temperature direct-current resistance was determined from the slope of a straight line obtained from the plot of three points. Power after 10 seconds from the start of discharge was calculated from the obtained direct-current resistance and used as initial power. The results are shown in Table 1.

### (2) Charge-discharge cycle test

Next, each nonaqueous electrolyte energy storage device was stored in a thermostatic bath at 60°C for 4 hours, then subjected to constant current charge up to 3.5 V at a current of 1.0 C, and then subjected to constant current discharge up to 2.0 V at a current of 1.0 C. A pause of 10 minutes was provided after charge and after discharge. This charge-discharge was repeated 300 cycles.

### (3) Power after charge-discharge cycle test

Thereafter, the power after the charge-discharge cycle test was determined by the same procedure as the procedure for determining the initial power. For each nonaqueous electrolyte energy storage device, the percentage of the power after the charge-discharge cycle test with respect to the initial power was determined and taken as the power retention rate. The results are shown in Table 1.

**[Table 1]**

| | Active material BET ratio (B2/B1) | Carbon-coated positive active material BET (B1) [m²/g] | Positive active material BET (B2) [m²/g] | **B1-B2 [m²/g]** | Negative active material particle size [µm] | Initial power [W] | Power retention rate [%] |
|---|---|---|---|---|---|---|---|
| Comparative Example 1 | **0.85** | **13.2** | **11.2** | **2.0** | **12** | **12** | **73** |
| Example 1 | **0.80** | **13.5** | **10.8** | **2.7** | **12** | **12** | **82** |
| Example 2 | **0.75** | **13.5** | **10.1** | **3.4** | **12** | **12** | **85** |
| Example 3 | **0.70** | **13.7** | **9.6** | **4.1** | **12** | **12** | **84** |
| Example 4 | **0.60** | **13.8** | **8.3** | **5.5** | **12** | **12** | **83** |
| Example 5 | **0.50** | **13.8** | **6.9** | **6.9** | **12** | **12** | **82** |
| Example 6 | **0.40** | **13.7** | **5.5** | **8.2** | **12** | **12** | **82** |
| Comparative Example 2 | **0.35** | **13.8** | **4.8** | **9.0** | **12** | **12** | **74** |
| Comparative Example 3 | **0.30** | **14.0** | **4.2** | **9.8** | **12** | **12** | **72** |
| Example 7 | **0.75** | **13.5** | **10.1** | **3.4** | **12** | **12** | **82** |
| Example 8 | **0.75** | **13.5** | **10.1** | **3.4** | **10** | **13** | **82** |
| Example 9 | **0.75** | **13.5** | **10.1** | **3.4** | **7** | **14** | **81** |
| Example 10 | **0.75** | **13.5** | **10.1** | **3.4** | **5** | **16** | **81** |
| Example 11 | **0.50** | **13.8** | **6.9** | **6.9** | **12** | **12** | **82** |
| Example 12 | **0.50** | **13.8** | **6.9** | **6.9** | **10** | **13** | **82** |
| Example 13 | **0.50** | **13.8** | **6.9** | **6.9** | **7** | **14** | **81** |
| Example 14 | **0.50** | **13.8** | **6.9** | **6.9** | **5** | **16** | **81** |
| Example 15 | **0.40** | **14.0** | **5.6** | **8.4** | **12** | **12** | **82** |
| Example 16 | **0.40** | **14.0** | **5.6** | **8.4** | **10** | **13** | **77** |

As shown in Table 1, in Examples 1 to 16 in which the active material BET ratio is 0.40 or more and 0.80 or less, the power retention rate is 75% or more. On the other hand, in Comparative Example 1 having an active material BET ratio of more than 0.80 and Comparative Examples 2 and 3 having an active material BET ratio of less than 0.40, the power retention rate is less than 75%. That is, in Examples 1 to 16, it is considered that the elution of iron ions from the positive active material and the formation of a coating film derived from iron ions on the surface of the negative active material were suppressed by protecting the positive active material with the moderately dense carbon coating layer.

Referring to Examples 1 to 16, the smaller the average particle size of the negative active material, the larger the initial power. In addition, when the average particle size of the negative active material is 5 µm, the initial power is remarkably improved. That is, it was suggested that even when the average particle size of the negative active material is small, improvement of the initial power and suppression of a decrease in the power retention rate after a charge-discharge cycle can be achieved at the same time by appropriately controlling the BET ratio of the active material.

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode including a carbon-coated positive active material; a negative electrode including a negative active material; and a nonaqueous electrolyte,
wherein the carbon-coated positive active material includes a positive active material containing a lithium transition metal compound having a polyanion structure, and a coating layer containing a carbon element and coating at least a part of the positive active material,
wherein a ratio of a BET specific surface area of the positive active material to a BET specific surface area of the carbon-coated positive active material is 0.40 or more and 0.80 or less, and
wherein the negative active material contains a carbon material.

2. The nonaqueous electrolyte energy storage device according to claim 1, wherein the negative active material contains graphite, and the negative active material has an average particle size of 20 µm or less.

3. The nonaqueous electrolyte energy storage device according to claim 1 or 2, wherein the ratio is 0.50 or more, and the average particle size of the negative active material is 5 µm or less.

4. An energy storage apparatus comprising: one or more nonaqueous electrolyte energy storage devices according to claim 1 or 2; and two or more nonaqueous electrolyte energy storage devices.
